# EUROPEAN PATENT APPLICATION

(11) **EP 1 084 622 A2**
(43) Date of publication of application: **21.03.2001**
(21) Application number: 00117270.9
(22) Date of filing: 16.08.2000
(51) Int. Cl.: A23G 1/00

(54) **Chocolates and chocolate compound coatings**

(30) Priority: 14.09.1999 US 154011 P
(71) Applicant: SOCIETE DES PRODUITS NESTLE S.A., 1800 Vevey (CH)
(72) Inventor: Budwig, Christopher, Columbus, OH 43201 (US); Destephen, Stephen J., Columbus, OH 43235 (US); Whaley, Melissa, Marysville, OH 43040 (US); Brown, Walda, Ridgeway, OH 43345 (US)
(74) Representative: Pate, Frederick George

(57) **Abstract**

A confectionery composition having improved chocolate character. The composition includes a chocolate or a chocolate compound coating and a mixture of pure flavor compounds. These pure compounds include at least one short chain fatty acid and at least one lactone. The compounds are present in combination in amounts which are effective to impart a milk chocolate flavor to the composition.

## Description

### Technical Field

The present invention relates to compositions and methods for improving the chocolate character of chocolates and chocolate compound coatings by the addition of pure fatty acids and lactones.

### Background Art

The food art is replete with disclosures regarding the enhancement of chocolate flavor in a wide variety of products, including beverages, ice cream, cakes and cookies, icing, and in the chocolate itself. Cocoa butter and cocoa powders are most commonly used for this purpose. Since the cocoa bean is a natural agricultural product, however, the world supply of cocoa bean fluctuates greatly according to a variety of unpredictable conditions, thus making cocoa butter and cocoa powers relatively expensive and sometimes difficult to obtain.

For this and other reasons, much effort has been made to find satisfactory substitutes, natural or artificial, for cocoa butter and cocoa powders. For example, U.S. Patent No. 4,335,153 discloses an imitation cocoa powder comprising flours, fat, and a small amount of water, flavor, and colorant. U.S. Patent 4,312,890 discloses a roasted yeast product having the characteristic texture, color, flavor, aroma, and mouth-feel of cocoa powder. U.S. Patent 5,932,275 discloses palm kernel oil blends suitable for use as cocoa butter substitutes.

It has long been recognized that pyrazine and pyrazine derivatives are important compounds that contribute to the flavor of chocolate, cocoa butter, and cocoa powder. For example, U.S. Patent No. 4,707,365 discloses that cocoa aroma is mainly influenced by the degree of roasting and that the roasting intensity can be estimated by chromatography of the methylated pyrazine in the cocoa aroma. U.S. Patent Nos. 3,328,402; 3,459,556; and 3,579,353 also disclosed pyrazine and pyrazine derivatives as flavoring agents, especially chocolate flavoring agents. For instance, U.S. Patent No. 3,459,556 to Tatsuo Moroe discloses a method of improving the flavor of a number of materials. As for improving the cocoa and chocolate flavor, the Moroe reference discloses the following formulation for cocoa aroma, in parts by weight:

| | |
|---|---|
| Tetramethyl pyrazine | 10 |
| Vanilla | 10 |
| Amylphenyl acetate | 1 |
| Iso-valeraldehyde | 1 |
| Iso-butyl aldehyde | 0.5 |
| Phenyl ethyl alcohol | 0.2 |
| Ethyl acetate | 0.1. |

Other compounds, such phenylacetaldehyde and isovaleraldehyde, are also known to contribute to chocolate flavor. Therefore, commercially available chocolate flavors, including those using extracts from cocoa, invariably all contain pyrazines, phenylacetaldehyde, or isovaleraldehyde, either alone or in combinations.

Additional compounds, such as short chain saturated fatty acids and lactones of the types usually found in milk fat, are also often present in commercial chocolate flavors, but these compounds are usually not the main ingredients of the chocolate flavor and/or are not present in the chocolate flavor in the absence of pyrazines, phenylacetaldehyde, and/or isovaleraldehyde. Thus, the effect of these compounds alone on the flavor of chocolates or chocolate compound coatings was not previously known.

Accordingly, the present invention seeks to provide improvements and/or simplification in the flavoring of chocolate or chocolate compound coatings beyond what is conventionally achieved in the art by the simple addition of various combinations of pure flavor active compounds.

### Summary of the Invention

The present invention relates to chocolate compositions and methods for the same that have improved chocolate character. Specifically, the present invention relates to compositions comprising chocolates or chocolate compound coatings and a mixture of pure flavor compounds comprising at least one short chain fatty acid and at least one lactone. These pure flavor compounds are present in combination in amounts which are effective to impart a milk chocolate flavor to the composition. Preferably, these compounds are utilized in the absence of pyrazines, phenylacetaldehyde, and/or isovaleraldehyde.

The present invention also relates to methods for producing compositions having improved milk chocolate character. Specifically, the present invention relates to methods of combining chocolates or chocolate compound coatings with a mixture of pure flavor compounds comprising at least one short chain fatty acid and at least one lactone in an effective amount to impart a milk chocolate flavor to the chocolates or chocolate compound coatings.

### Detailed Description of the Preferred Embodiments

It has been surprisingly discovered that the addition of a combination of pure flavor compounds to fat based confectionery masses such as chocolates and chocolate compound coatings can improve the chocolate character of such masses, particularly because these pure flavor compounds were added in the absence of any of three conventional materials for chocolate flavor, namely, pyrazine, phenylacetaldehyde, and isovaleraldehyde. The term "essentially free" is used to indicate that the amounts of pyrazine, phenylacetaldehyde, and isovaleraldehyde flavoring agents in the composition are at zero or at a level which is below their flavor threshold so that they are not of significance in such compositions.

The following definitions are used in this specification:
"chocolate" is used to mean any confectionery product having qualities sufficient to impart chocolate taste and character. Suitable chocolates include, but are not limited to, sweet chocolate, milk chocolate, buttermilk chocolate, milk chocolate, bittersweet chocolate and "legal" chocolates as defined in 21 C.F.R. § 163. Chocolate also includes compound coatings that have a chocolate flavor as well as and any other material that performs as a chocolate analogue or a chocolate substitute.
"chocolate character" is used to mean the flavor of chocolates or chocolate compound coatings.
"chocolate compound coating" is used to mean any confectionery product based on cocoa butter alternatives such as vegetable fats, rather than cocoa butter. In addition to vegetable fat, such coatings typically contain sugar, flavorings such as cocoa solids, peanut solids, or other natural or artificial flavors, emulsifiers, coloring agents, and, optionally, milk solids.
"pure flavor compound" is used to mean any pure chemical compound that is known or has been proven to have the ability of influencing the aroma, flavor, or taste of a food product.

In a preferred embodiment of the present invention, the composition includes milk chocolates or chocolate compound coatings and short chain fatty acids and lactones in such amounts as to produce chocolates or chocolate compound coatings that have improved chocolate character.

The short chain fatty acids include those that have a carbon chain of between 3 and 16 carbon atoms and preferably between 4 and 10 carbon atoms. Advantageously, butyric acid, hexanoic acid, octanoic acid and isovaleric acid are used alone or in combination. While two of these acids are suitable, it is possible to use three or more depending upon the desired final taste. In the most preferred embodiment, butyric acid is used as a primary fatty acid component, with hexanoic acid, octanoic acid or both being used as a secondary fatty acid component.

These short chain fatty acids are typically used in a total amount of between about 5 and 75 ppm, and preferably between about 10 and 50 ppm, based on the weight of the confectionery mass. When combinations of fatty acids are utilized, each can be present in various amounts which provide the total amount. It is also within the scope of this invention to utilize a predominant amount of a primary fatty acid and lesser amounts of one or more different secondary fatty acids. For example, the primary fatty acid can be present in an amount of about 5 to 30 ppm, and preferably about 15 to 25 ppm, with the secondary fatty acid(s) each being present in an amount of 0.1 to 10 ppm and preferably between 0.1 and 5 ppm. Advantageously, at least one secondary fatty acid is utilized in combination with the primary fatty acid. If desired, two or more secondary fatty acids can be used. In these embodiments, it is preferred to utilize a lower carbon chain fatty acid as the primary fatty acid and higher carbon chain fatty acid(s) as the secondary fatty acid, with those having between 4 and 6 carbon atoms being preferred as the primary fatty acid and those having 4 to 10 carbon atoms as the secondary fatty acid(s). The examples illustrate the most preferred combinations and amounts of this component.

The lactones include δ- and γ-lactones having between 6 and 20 carbon atoms, and preferably between 6 and 16 carbon atoms. Those having between 8 and 12 carbon atoms are most often used, with δ-decalactone, δ-dodecalactone and γ-octalactone being the most preferred.

Although one lactone can be used, it is preferred to utilize combinations of two or more different lactones. Advantageously, two different lactones are utilized, with the difference in number of carbon atoms between them being at least two.

The amount of lactone can vary between about 0.05 and 25 ppm and preferably between 2 and 15 ppm, based on the weight of the confectionery mass. When combinations are used, the amount of each can range from about 0.1 to 7 and preferably between 0.25 and 4 ppm. Again, the examples illustrate the most preferred combinations and amounts of this component.

The short chain saturated fatty acids and lactones in the present invention are normally found in milk fat, although not in pure form therein. Although these compounds can usually be found in commercial chocolate flavors, they have not been used alone in chocolate flavors or in the absence of the main ingredients of commercial chocolate flavor, namely pyrazines, phenylacetaldehyde, or isovaleraldehyde. As such, the compounds used in the present invention do not themselves resemble chocolate flavor. Surprisingly, when these compounds were added to chocolates or the chocolate compound coatings, the milk chocolate character of the composition was improved.

In a preferred embodiment, the compositions of the present invention is characterized by a greater chocolate-like flavor, a higher milky flavor, and a slightly higher dairy sour flavor.

More preferably, the pure flavor compounds are selected from the group consisting of butyric acid, hexanoic acid, octanoic acid, δ-decalactone, and δ-dodecalactone.

In a most preferred embodiment of the present invention, the mixture of the pure flavor compounds is a combination of butyric acid, hexanoic acid, octanoic acid, δ-decalactone, and δ-dodecalactone.

The confectionery compositions of the present invention can be used in a variety of products including, but not limited to, chocolate and compound coatings. One of ordinary skill in the art may readily envision a variety of uses of the compositions and methods of the present invention.

### EXAMPLES

The invention is further characterized by reference to the following examples describing in detail the most preferred compositions of the present invention. The examples are representative, and should not be construed to limit the scope of the invention in any way.

### Example 1.

A milk chocolate compound coating was first prepared according to the following general composition:

| **Component** | **Weight Percentage** |
|---|---|
| Sucrose | 50.00 |
| Non fat dry milk (NFDM) | 13.78 |
| Cocoa | 6.00 |
| Vegetable Fat | 30.00 |
| Vanillin | 0.02 |
| Lecithin | 0.20 |

The following pure flavor compounds in the amounts listed were then added to the milk chocolate compound coating and the compositions were evaluated by a panelist experienced in tasting chocolate and cocoa:

| **Compound** | **Concentration (ppm)** |
|---|---|
| Butyric acid | 20 |
| Hexanoic Acid | 2.0 |
| Octanoic Acid | 1.0 |
| δ-Decalactone | 0.5 |
| δ-Dodecalactone | 0.5 |

The panelist's sensory comments were provided both for flavor and aroma characteristics:

| Aroma | |
|---|---|
| **Coatings with No Flavor Compound** | **Coatings with Flavor Compound Added** |
| Sweet | Cheesy |
| Sugary | Slight Sour Dairy |
| Chocolate | Slight Butyric |

| Flavor | |
|---|---|
| **Coatings with No Flavor Compound** | **Coatings with Flavor Compound Added** |
| Moderate Chocolate/Cocoa | Moderate Chocolate Like Flavor |
| Moderate Cooked Dairy | Higher Milky |
| Slight to Moderate Caramelized Dairy | Higher Dairy Sour |
| Slight Vanilla/Vanilla | Moderate Cheesy |
| Slight Cardboard/Papery | - |
| Moderate to High Sweet | - |

### Example 2.

Three additional combinations of pure flavor compounds were added to the milk chocolate compound coating described in Example 1 and the compositions were evaluated by panelist experienced in tasting chocolate and cocoa.

| **Compound** | **Concentration** | | |
|---|---|---|---|
| | **Sample 1** | **Sample 2** | **Sample 3** |
| Butyric Acid | 20 | 20 | 20 |
| Hexanoic Acid | 4.0 | 4.0 | 10 |
| Octanoic Acid | 2.0 | 2.0 | 5.0 |
| δ-Decalactone | 0.5 | 1.0 | 1.0 |
| δ-Dodecalactone | 1.0 | 2.0 | 2.0 |

The panelist's sensory comments are as follows:

| **Control Sample** | **Sample 1** | **Sample 2** | **Sample 3** |
|---|---|---|---|
| Slight bland, | Rich full dairy, | Coconut at end, | Slight buttery, |
| Cocoa, | More buttery, | Stronger buttery, | Caramelized, |
| Sweet, | Caramelized, | Strong dairy, | Medium good-rounded dairy, |
| More caramel, | More acidic, | Sweet cream, | |
| Grainy, | Sweet end-note, | Weak caramel | Cheese, |
| Bland dairy | Rich caramel | | Marshmallow |

As can be seen from these examples, the combination of short chain fatty acids and cyclic lactones can be used to impart desirable flavors to chocolate or compound chocolate coatings.

## Claims

1. A confectionery composition having improved chocolate character comprising a chocolate or a chocolate compound coating and a mixture of pure flavor compounds comprising at least one short chain fatty acid and at least one lactone, wherein the pure flavor compounds are present in combination in amounts which are effective to impart a milk chocolate flavor thereto.

2. The confectionery composition of claim 1, wherein the total amount of pure flavor compounds is between about 5 and 100 ppm.

3. The confectionery composition of claim 2, wherein the mixture of pure compounds is essentially free of pyrazines, phenylacetaldehyde, and isovaleraldehyde flavoring agents.

4. The confectionery composition of claim 2, wherein each short chain saturated fatty acid has a carbon chain of between 3 and 16 carbon atoms, and at least two different fatty acids are utilized in combination, with the total amount of fatty acids being about 5 to 75 ppm.

5. The confectionery composition of claim 4, wherein a first fatty acid is present in an amount of between about 1 and 30 ppm and at least one additional fatty acid is present in an amount of about 0.1 and 10 ppm, with the first fatty acid having a carbon chain that is at least 2 carbon atoms shorter than that of the additional fatty acid.

6. The confectionery composition of claim 4, wherein a first fatty acid is present in an amount of between about 1 and 30 ppm and at least two additional fatty acids are present, each in an amount of about 0.1 and 10 ppm, with the first fatty acid having a carbon chain that is at least 2 carbon atoms shorter than those of the additional fatty acids.

7. The confectionery composition of claim 6, wherein the first fatty acid is butyric acid in an amount of between about 1 and 25 ppm, and the additional fatty acids are hexanoic acid and octanoic acid, each in an amount of between about 0.1 and 5 ppm.

8. The confectionery composition of claim 2, wherein the lactone includes γ-lactones and δ-lactones having between 5 and 20 carbon atoms, and at least two different lactones are utilized in combination, with the difference in number of carbon atoms being at least two and with the total amount of cyclic lactones being between about 0.05 and 25 ppm.

9. The confectionery composition of claim 8, wherein the two lactones differ by at least two carbon atoms and each is present in an amount of between about 0.05 and 7 ppm.

10. The confectionery composition of claim 9, wherein one lactone is δ-decalactone, one lactone is δ-dodecalactone and each is present in an amount of between about 0.05 and 4 ppm.

11. A method of producing a confectionery composition having improved chocolate character which method comprises adding to a chocolate or a chocolate compound coating a mixture of pure flavor compounds comprising at least one short chain fatty acid and at least one lactone, wherein the pure flavor compounds are present in combination in amounts which are effective to impart a chocolate flavor to the chocolate or the chocolate compound coating.

12. The method of claim 11, wherein the confectionery mass is a fat based confectionery mass and the total amount of pure compounds added is between about 1 and 100 ppm.

13. The method of claim 11, wherein the mixture of pure compounds is essentially free of pyrazines, phenylacetaldehyde, or isovaleraldehyde flavoring agents.

14. The method of claim 13, wherein at least two different fatty acids are added, each having a carbon chain of between 3 and 16 carbon atoms, with one fatty acid having a carbon chain that is at least 2 carbon atoms shorter than the other, and the total amount of fatty acids added being about 1 to 75 ppm.

15. The method of claim 11, wherein at least two different lactones are added, each including between 5 and 20 carbon atoms and the number of carbon atoms of the lactones differing by at least two, with the total amount of cyclic lactones being between about 0.05 and 25 ppm.
